# NEUE EUROPÄISCHE PATENTSCHRIFT

(11) **EP 1 276 699 B2**
(45) Veröffentlichungstag und Bekanntmachung des Hinweises auf die Entscheidung über den Einspruch: **17.10.2007**
(45) Hinweis auf die Patenterteilung: 25.08.2004
(21) Anmeldenummer: 01907549.8
(22) Anmeldetag: 22.02.2001
(51) Int. Cl.: C02F 1/68, C02F 1/42

(54) **VERFAHREN ZUR VERMINDERUNG VON STEINBILDUNG UND/ODER KORROSION IN FLÜSSIGKEITEN FÜHRENDEN SYSTEMEN**
METHOD FOR REDUCING SCALE FORMATION AND/OR CORROSION IN SYSTEMS WHICH CONDUCT LIQUIDS
PROCEDE PERMETTANT DE LIMITER LA FORMATION DE TARTRE ET/OU LA CORROSION DANS DES SYSTEMES D'ACHEMINEMENT DE LIQUIDES

(30) Priorität: 26.04.2000 DE 10020437
(43) Veröffentlichungstag der Anmeldung: 22.01.2003
(73) Patentinhaber: Honeywell Technologies Sarl, 1110 Morges (CH)
(72) Erfinder: MIECZNIK, Bert, 74834 Elztal-Auerbach (DE)
(74) Vertreter: Graefe, Jörg
(86) Internationale Anmeldenummer: PCT/EP2001/002007
(87) Internationale Veröffentlichungsnummer: WO 2001/085620

(56) Entgegenhaltungen:
- DE-A- 1 955 571
- DE-A- 3 812 413
- DE-A- 4 015 336
- DE-C- 2 826 702
- GB-A- 2 013 171
- US-A- 4 383 924
- US-A- 4 931 187
- Roempp Chemie Lexikon Herausgeber: Juergen Falbe, Manfred Regitz, 9.Auflage, 1989-1992, S. 1698-1700, 2536-2537

## Beschreibung

Die Erfindung betrifft ein Verfahren zur Verminderung der Steinbildung und/oder Korrosion in Systemen, die Flüssigkeiten führen oder mit Flüssigkeiten in Kontakt stehen, gemäß dem Oberbegriff des Anspruchs 1.

Aus dem Stand der Technik ist es seit langem bekannt, dass aus Flüssigkeiten Ablagerungen und Krusten abgeschieden werden, insbesondere dann, wenn die Flüssigkeiten härtebildende Salze von Elementen (Magnesium, Calcium, Strontium, Barium) aus der Gruppe der Erdalkalimetalle enthalten. Das bekannteste und technisch auch bedeutendste Beispiel für die Ausbildung von Ablagerungen aus Flüssigkeiten ist die Kalksteinbildung aus dem Medium Trinkwasser, wobei es insbesondere bei Erwärmung des Wassers zur Ablagerung von carbonatischen und anderen Salzen des Erdalkalimetalls Calcium kommt. Diese Ablagerungen, welche auch andere mitgefällte Stoffe enthalten können, sind gegenüber dem Medium Trinkwasser weitgehend unlöslich und können in ungünstigen Fällen zur Ausbildung von Inkrustierungen bis hin zu einer Verblockung von flüssigkeitsführenden Systemen (z.B. Rohrleitungen, Wasserenwärmer, Kessel) sowie zur Ausbildung unerwünschter sichtbarer Ablagerungsspuren bei flüssigkeitsberührten Systemen (z.B. Waschbecken, Duschabtrennungen) führen. Der Volksmund nennt das Auftreten dieser Effekte "Verkalkung" und setzt Trinkwasser, welche nennenswerte Anteile von Härtebildnern aufweisen - sogenannte harte Wasser - oftmals mit qualitativ schlechten Wassern gleich, ungeachtet der Tatsache, dass Anteile von Härtebildnern in Trinkwasser als in anderem Zusammenhang hochwillkommene Mineralstoffe gelten, die nicht nur für die Ernährung bedeutend sind, sondern denen darüber hinaus auch geschmacksverbessernde Eigenschaften nachgesagt werden.

Um der Gefahr der Steinbildung entgegenzuwirken, hat sich in der Vergangenheit eine große Vielfalt von Verfahren etabliert. Insbesondere sind hier Verfahren zur stofflichen Entfernung der Härtebildner oder der korrespondierenden carbonatischen Anionen aus den Flüssigkeiten zu nennen, wofür verschiedene Möglichkeiten zur Verfügung stehen, z.B. mechanische Enthärtung durch Membranen, Austausch der Härtebildner gegen andere Ionen, Destillation und im größeren Maßstab auch Fällung, Flockung und Filtration. Daneben gibt es Verfahren, welche die Gefahr von Ablagerungen durch das Zudosieren verschiedener Stoffe zur Inhibierung bzw. Maskierung der Härtebildner bekämpfen, wobei als Beispiele hier Dosierung von Polyphosphaten, Dosierung von Zeolithen oder Dosierung von Aminopolycarbonsäuren wie NTA oder EDTA zu nennen wären. Die Palette der verfügbaren Verfahren wird ergänzt durch Verfahren, welche nicht auf die Kationen der Härtebildner selbst, sondern auf die zur Steinbildung erforderlichen carbonatischen Anionen zielen, wiederum mit den Varianten der Entfernung bzw. der Inhibierung der carbonatischen Anionen. In jüngster Zeit haben darüber hinaus auch Verfahren Anerkennung gewonnen, die das Entstehen oder das Wachstum kalkhaltiger Ablagerungen durch Einbringen von sogenannten Impfkristallen oder Kristallkernen in das Wasser verhindern sollen, wobei ein Teil dieser Verfahren darauf beruht, die Impfkristalle oder Kristallkerne im Zuge der Behandlung aus den zuvor in Wasser gelöst vorliegenden Inhaltsstoffen herzustellen. Für eine Beurteilung, ob solche Verfahren tatsächlich in der Lage sind, die Steinbildung zu vermindern, wurden verschiedene, meist empirische Prüfverfahren beschrieben, von denen jedoch wohl nur dem DVGW-Arbeitsblatt W512 eine größere Bedeutung unterstellt werden kann.

Zum Zwecke des Korrosionsschutzes stehen ebenfalls verschiedene Verfahren zur Verfügung, welche sich einteilen lassen in filternde Verfahren, die vermittels einer Entfernung partikulär vorliegender Wasserinhaltsstoffe das Risiko der Ausbildung lokaler Korrosionszellen vermindern, sowie in Verfahren, die durch eine Zudosierung korrosionsinhibierender Chemikalien, z.B. Ortho-Phosphat, Aluminium, Magnesium, Zink, gekennzeichnet sind, wobei man sich teilweise ein dem Korrosionspotential entgegengerichtetes elektrochemisches Potential während der Auflösung zunutze macht (passive Opferanoden, bzw. aktiver kathodischer Korrosionsschutz).

Schließlich gibt es Verfahren, welche den Korrosionsschutz durch eine Einstellung von Gleichgewichtsbedingungen oder kalkabscheidenden Bedingungen nach dem Kalk-Kohlensäure-Gleichgewicht erzielen, wofür entweder der Säuregehalt der Flüssigkeit reduziert wird, oder aber der Gehalt der Flüssigkeit an Säurebindungsvermögen und damit meist einhergehend auch an Härtebildnern erhöht wird ("Marmorfiltration").

Damit ergibt sich für die Betrachtung der Härtebildner sowie der korrespondierenden meist carbonatischen Anionen die Situation, daß diese bei einem relativen Überschuss die Bildung von Ablagerungen verursachen können, während auf der anderen Seite ein relativer Mangel an Härtebildnern sowie der korrespondierenden meist carbonatischen Anionen Korrosionsprozesse beschleunigen kann. Dieser Zusammenhang wird über das sogenannte Kalk-Kohlensäure-Gleichgewicht beschrieben, aus dessen näherer Betrachtung ersichtlich wird, dass zwischen den beiden Extremen der Steinbildung sowie der Korrosion ein Zustand des Gleichgewichts existiert, in dem eine Flüssigkeit weder zur Steinbildung noch zur Korrosivität neigt.

Dieser Gleichgewichtszustand wird jedoch instabil, wenn die Flüssigkeit, beispielsweise das Trinkwasser, Temperaturschwankungen unterliegt. So verschiebt sich bei der Erwärmung das Kalk-Kohlensäure-Gleichgewicht aus dem neutralen Zustand in den Zustand der Steinbildung, der so lange vorhält, bis das Wasser durch Abscheidung der nun überschüssigen Härtebildner wieder ins Gleichgewicht kommt. Wird dieses an Härtebildnern verarmte Wasser nun anschließend wieder abgekühlt, so kann Korrosivität entstehen.

Alle vorgenannten Verfahren zielen in ihrer Funktionserfüllung entweder ausschließlich auf den Aspekt der Verminderung der Steinbildung oder ausschließlich auf den Aspekt des Korrosionsschutzes. Oftmals muss für den praktischen Einsatz ein Verfahren, das auf den einen Aspekt zielt, noch durch ein zweites Verfahren ergänzt werden, welches den jeweils anderen Aspekt berücksichtigt.

Hinsichtlich druckschriftlichen Standes der Technik wird verwiesen auf DE-A-28 00 516, DE-A-19 55 571 und DE-A-38 12 413.

Ein Verfahren gemäß dem Oberbegriff des Anspruchs 1 ist aus der Druckschrift DE-A-28 00 516 bekannt. Aus der Druckschrift DE-A-38 12 413 ist ferner eine Vorrichtung und ein Verfahren bekannt, bei dem ein Teil eines Stroms zur Aufhärtung behandelt wird, wobei dieser behandelte Teil anschließend mit dem unbehandelten Teil vereinigt wird, wobei sich die Härte der vereinigten Ströme über die Menge des behandelten Stroms einstellt.

Hiervon ausgehend liegt der Erfindung das Problem zu Grunde, ein verbessertes Verfahren zur Verminderung der Steinbildung und/oder Korrosion in Systemen, die Flüssigkeiten führen oder mit Flüssigkeiten in Kontakt stehen, sowie eine entsprechende Vorrichtung zu schaffen.

Dies gelingt mit dem im Patentanspruch 1 beschriebenen Verfahren.

Die Erfindung macht sich durch Modifikation der molaren Verteilung der Härtebildner untereinander naturnahe Effekte zunutze, die beide Aspekte der Verminderung der Steinbildung sowie der Verminderung der Korrosion integral miteinander verknüpfen und im Resultat zu einem gleichzeitigen Schutz vor Steinbildung und vor Korrosion führen, ohne dabei den Gehalt an Härtebildnern insgesamt zu verändern und ohne dabei auf die Zudosierung anderer Stoffe angewiesen zu sein.

Die Erfindung beruht auf der Erkenntnis, daß eine Flüssigkeit wie beispielsweise Trinkwasser - auch bei ihrer Erwärmung - dann weniger steinbildend wirkt, wenn sie in der natürlichen Zusammensetzung der in ihr gelösten Härtebildner größere Magnesiumanteile von über 20% bis 100% des Gesamtgehaltes an Härtebildnern aufweist. Die Erfindung zielt darauf, den natürlichen Schutzeffekt höherer Magnesiumanteile an der Gesamthärte auch für diejenigen Flüssigkeiten verfügbar zu machen, die nicht über natürlich entstandene höhere Magnesiumanteile an der Gesamthärte verfügen und sieht dazu vor, Anteile der anderen Härtebildner gegen Anteile an Magnesium auszutauschen.

Dieselbe Beobachtung einer verminderten Steinbildung trifft zu, wenn die Flüssigkeit zwar nicht über eine hohe natürliche Magnesiumhärte verfügt, aber beispielsweise während der Trinkwasseraufbereitung zum Zwecke der Aufhärtung mit Dolomit oder anderen magnesiumhaltigen Gesteinen oder Mineralien wie Magnesiumchlorid oder Magnesiumchlorid-Hexahydrat in Kontakt gebracht wurde. Anders als bei den genannten Prozessen, die vorrangig auf eine Erhöhung des Gehalts an Härtebildnern zielen, macht sich die Erfindung den vor Steinbildung schützenden Effekt größerer Magnesiumanteile an der Gesamthärte als gezielte Hauptwirkung zunutze, ohne dabei zwangsläufig die Härte der Flüssigkeit zu erhöhen. Auch findet bei den genannten Prozessen keine Reduzierung derjenigen Anteile an der Gesamthärte statt, die nicht aus Magnesium bestehen, da es allgemein nicht zu einem Austausch von bereits gelöst vorliegenden Härtebildnern gegen die zusätzlich angebotenen Magnesiumanteile kommt und zusätzliche Magnesiumgehalte nur additiv beigegeben werden. Die Erfindung umfasst grundsätzlich alle Anwendungen, bei denen nicht aus Magnesium bestehende Anteile an der Gesamthärte gegen Anteile an Magnesium ausgetauscht werden.

Durch die Erfindung wird Steinbildung wirksam vermindert. Damit stehen auch bei einer gegebenenfalls nach einer Erwärmung vorgenommenen Abkühlung der Flüssigkeit diejenigen Härtebildner und ihre korrespondierenden, meist carbonatischen Anionen weiterhin als Korrosionsschutz zur Verfügung, die sonst aufgrund ihrer Entfernung durch Steinbildung zur relativen Verarmung der Flüssigkeit an Härtebildnern geführt hätten.

Darüber hinaus haben höhere Magnesiumanteile in einer Flüssigkeit auch weitere positive Effekte hinsichtlich der Korrosionsneigung. So erfolgt die Deckschichtbildung (Schutzschichtbildung) mit hydroxidischen Ablagerungen von Magnesium als Härtebildner effektiver und feinkristalliner und damit "dichter" als beispielsweise mit Calcium. Dieser positive Effekt wird auch durch die Erfindung gewährleistet, so dass sich im Ergebnis ein Korrosionsschutzeffekt durch die Erfindung dahingehend ergibt, dass sowohl ein doppelter passiver Schutz (Schutzschichtbildung, Verfügbarkeit von Härtebildnern nach Abkühlung erwärmter Flüssigkeiten) wie auch gegebenenfalls ein aktiver Schutz durch sterische und komplexchemische Effekte entsteht.

Bevorzugte Weiterbildungen der Erfindung ergeben sich aus den Unteransprüchen und der nachfolgenden Beschreibung. Bevorzugte Ausführungsbeispiele werden nachfolgend anhand der Zeichnung beschrieben. In der Zeichnung zeigt:
- Fig. 1:: eine Darstellung zur Verdeutlichung des erfindungsgemäßen Verfahrens nach einem ersten Ausführungsbeispiel der Erfindung,
- Fig. 2:: eine Darstellung zur Verdeutlichung des erfindungsgemäßen Verfahrens nach einem zweiten Ausführungsbeispiel der Erfindung,
- Fig. 3:: eine Darstellung zur Verdeutlichung des erfindungsgemäßen Verfahrens nach einem dritten Ausführungsbeispiel der Erfindung,
- Fig. 4:: eine Darstellung zur Verdeutlichung des erfindungsgemäßen Verfahrens nach einem vierten Ausführungsbeispiel der Erfindung,
- Fig. 5:: eine Darstellung zur Verdeutlichung des erfindungsgemäßen Verfahrens nach einem fünften Ausführungsbeispiel der Erfindung, und
- Fig. 6:: eine Darstellung zur Verdeutlichung des erfindungsgemäßen Verfahrens nach einem weiteren Ausführungsbeispiel der Erfindung.
- Fig. 7:: eine Darstellung zur Verdeutlichung des erfindungsgemäßen Verfahrens nach einem großtechnischen Ausführungsbeispiel der Erfindung.

Es sind verschiedene Vorrichtungen vorstellbar, die den erfindungsgemäßen Austausch von anderen Härtebildnem gegen den Härtebildner Magnesium bewerkstelligen können.

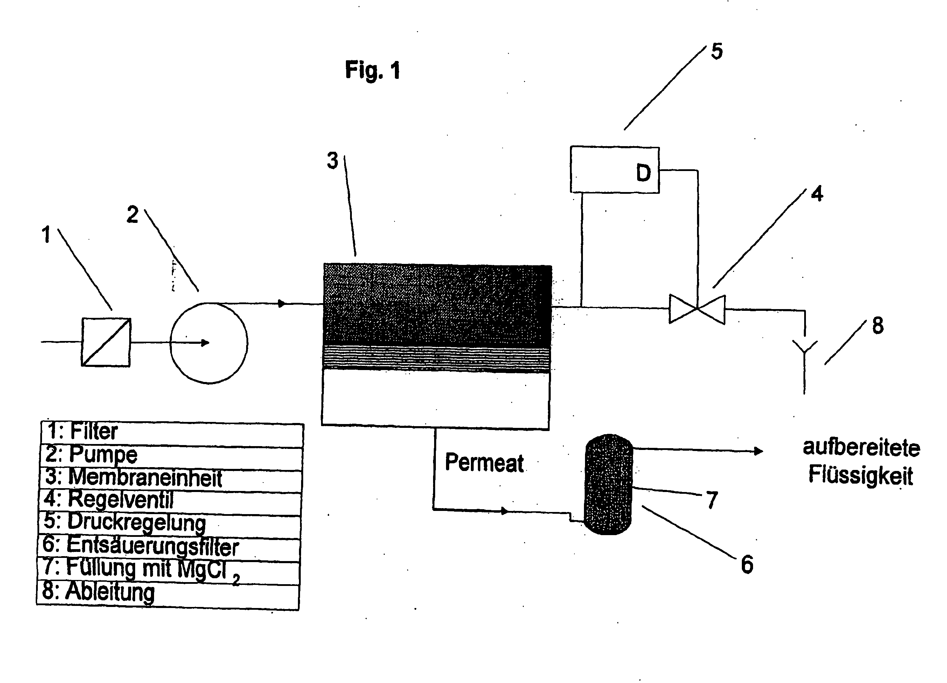

Der erfindungsgemäße Austausch kann beispielsweise nach Fig. 1 erfolgen. Gemäß Figur 1 wird einem Membranverfahren ein Aufhärtungsverfahren angeschlossen. Figur 1 zeigt, dass die zu behandelnde Flüssigkeit einen Filter und eine Pumpe 2 passiert und dann einer Membraneinheit 3 zugeführt wird, in der das Membranverfahren abläuft. Bei dem Membranverfahren handelt es sich um eine mechanische Enthärtung mittels z.B. Umkehrosmose oder Nanofiltration. Im Anschluß hieran strömt die Flüssigkeit in eine Aufhärtungseinheit 6, die mit Dolomit oder anderen magnesiumhaltigen Gesteinen oder Mineralien wie Magnesiumchlorid oder Magnesiumchlorid-Hexahydrat 7 betrieben wird. Wie Figur 1 entnommen werden kann, verläßt die aufbereitete Flüssigkeit die Aufhärtungseinheit 6. Die übrigen dargestellten Baugruppen wie Druckregelung 5, Regelventil 4 und Ableitung 8 sind in ihrer Funktion und Arbeitsweise dem Fachmann geläufig und bedürfen keiner detaillierten Beschreibung.

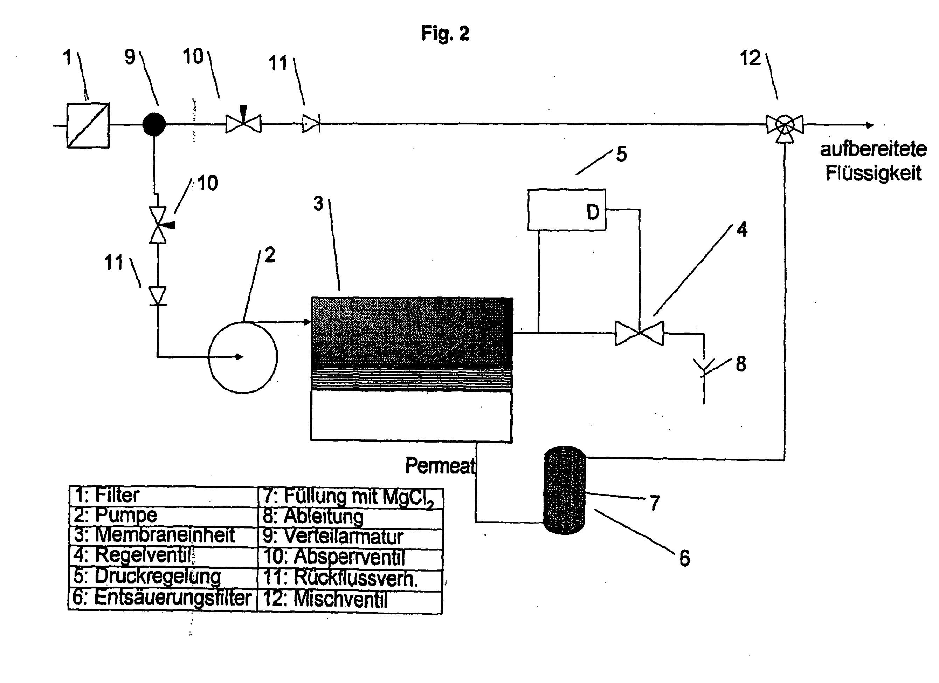

Nach Fig. 2 wird die entsprechende Behandlung nach Fig. 1 erfindungsgemäß auf einen Teilstrom der Flüssigkeit begrenzt werden, der dann anschließend wieder mit dem unbehandelten Hauptstrom vereinigt wird. Dadurch ergibt sich zusätzlich die Möglichkeit, durch Regulierung der Stromverhältnisse die Magnesiumgehalte im Hauptstrom genauer zu definieren. Die Abzweigung des Teilstroms erfolgt an der Verteilerarmatur 9, während die Vereinigung des behandelten Teilstroms mit dem unbehandelten Hauptstrom am Mischventil 12 der Figur 2 erfolgt. Die Behandlung lediglich eines Teilstroms ist besonders vorteilhaft. So ist es eine Erkenntnis der Erfindung, daß auch die Behandlung eines Teilstroms ausreichend ist, um eine effektive Verminderung der Steinbildung und/oder Korrosion zu erzielen. Es handelt sich hierbei um einen überraschenden Effekt, da der Fachmann bei Behandlung lediglich eines Teilstroms nur eine Verminderung der Steinbildung in dem Umfang erwarten würde, in dem ein behandelter Teilstrom vorliegt. Mit anderen Worten würde der Fachmann eine Verminderung der Steinbildung um 50% erwarten, wenn der Teilstrom sowie der Hauptstrom jeweils 50% ausmachen. Es wurde jedoch bei Behandlung lediglich eines Teilstroms der überraschende Effekt festgestellt, daß sich auch bei Behandlung lediglich eines Teilstroms eine nahezu unverminderte Verminderung der Steinbildung und/oder Korrosion erzielen läßt. Die erwünschte Wirksamkeit bleibt demnach auch bei Behandlung lediglich des Teilstroms in vollem Umfang erhalten. Der Teilstrom sollte jedoch mindestens 50% des Gesamtstroms ausmachen. Die Wirksamkeit bleibt demnach nahezu unverändert, wenn der zu behandelnde Teilstrom mindestens 50% und der unbehandelte Hauptstrom maximal 50% ausmacht.

Als Beispiel ist demnach möglich: 70% zu behandelnder Teilstrom; 30% unbehandelter Hauptstrom.

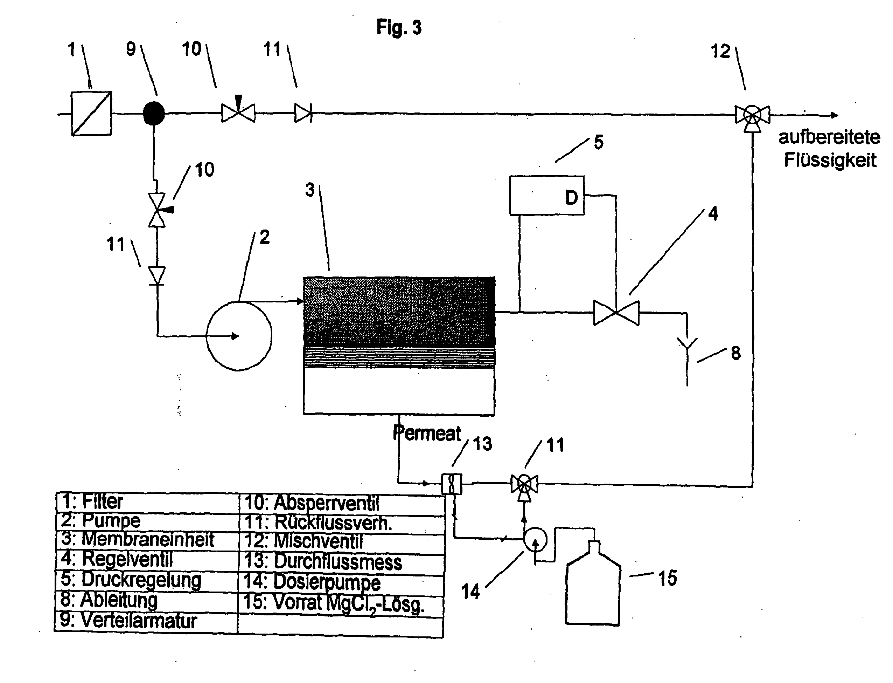

Nach Fig. 3 kann die der mechanischen Enthärtung nachgeschaltete Aufhärtungseinheit nach Fig. 1 oder Fig. 2 auch durch eine mengenproportionale Dosierung einer konzentrierten Lösung eines Magnesiumsalzes wie beispielsweise einer Magnesiumchloridlösung erfolgen. Die Magnesiumchloridlösung ist in einem Vorratsbehälter 15 gelagert und wird mengenproportional mit Hilfe der Baugruppen Durchflußmesser 13, Dosierpumpe 14 und Rückflußverhinderer 11 zudosiert. Hierbei ist auch die Möglichkeit der Verwendung bereits bestehender und installierter Dosiersysteme und damit die Möglichkeit der Umwidmung dieser Systeme auf das erfindungsgemäße Verfahren gegeben. Dazu müssen die Dosiersysteme entweder durch Eingriffe in die Regelung auf die Abgabe geeigneter Mengen an Magnesiumsalzen nachjustiert werden, oder die Lösung des verwendeten Magnesiumsalzes muss in ihrer Konzentration so eingestellt werden, dass geeignete Mengen abgegeben werden. Auch kann die Dosiereinrichtung unter Beibehaltung des bestehenden Regelsystems bauseitig so umgerüstet werden, dass über eine Verändenung an der Pumpe (z.B. Pumpenkopf, z.B. Lumen bei peristaltischen Pumpen) eine geeignete Menge abgegeben wird. Möglich ist hier auch, die Messeinrichtung des Dosiersystems zur Ermittlung des aktuellen Durchflusses durch ein Zusatzmodul so zu manipulieren, dass das System anstelle des aktuellen Durchflusses einen jedenfalls proportionalen, virtuellen Durchfluss detektiert und die Dosierung in einer solchen Menge vornimmt, wie es dem virtuellen Durchfluss entsprechen würde und zwar in dem Verhältnis, dass damit genau die erforderliche Dosiermenge für den aktuellen Durchfluss erreicht wird.

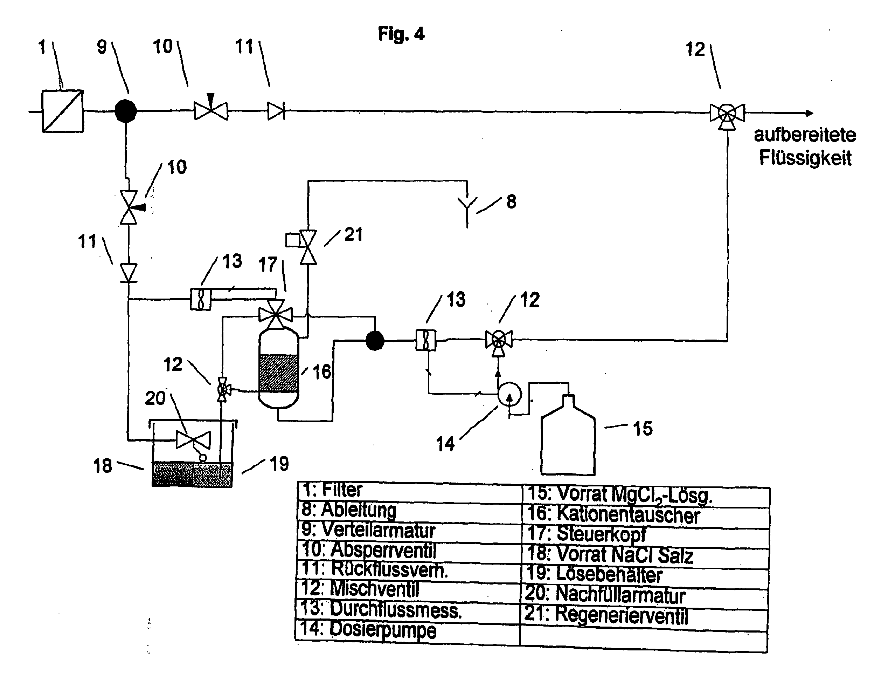

Nach Fig. 4 ist es auch möglich, die mechanische Enthärtung durch eine Enthärtung über einen Ionenaustauscher 16 im Austausch gegen andere Kationen wie Natrium oder Kalium durchzuführen, wobei der Enthärtungseinheit wiederum eine mengenproportionale Dosierung einer konzentrierten Lösung eines Magnesiumsalzes wie beispielsweise einer Magnesiumchloridlösung mit Hilfe der Baugruppen 12, 13, 14 und 15 nachgeschaltet ist. Durch diese Anordnung erhöht sich bei korrekter Dosierung die Härte der Flüssigkeit zwar nicht, prinzipbedingt ist hier jedoch eine Erhöhung der Salinität unvermeidbar, so dass der Einsatz der unter 4. gezeigten Vorrichtung auf Fälle begrenzt werden muss, bei denen eine Erhöhung des Gesamtsalzgehaltes der Flüssigkeit unkritisch ist. Auch hier ist -wie dargestellt- die Behandlung eines Teilstroms möglich.

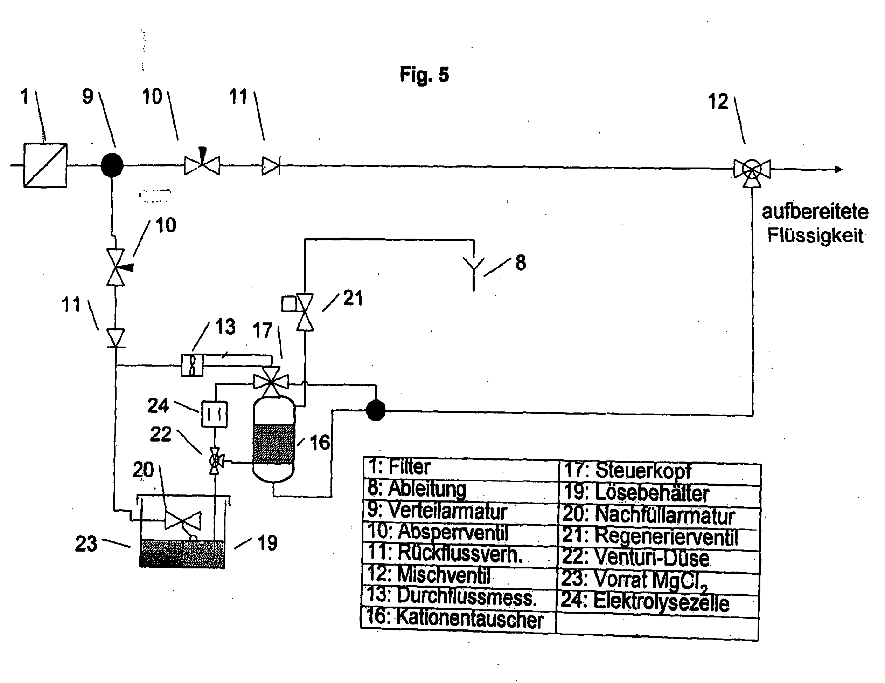

Nach Fig. 5 ist es auch möglich, die Behandlung der Flüssigkeit mit den Teilschritten Entfernung anderer Härtebildner und Hinzufügen von Magnesium in einer einzigen Vorrichtung zu integrieren und dadurch eine Erhöhung der Salinität ebenfalls auszuschließen. Hierzu kann beispielsweise ein stark saurer, mit Magnesiumionen beladener Kationenaustauscher 16 verwendet werden, der während der Betriebsphase Anteile anderer Härtebildner wegen ihres höheren molaren Gewichtes spezifischer als Magnesium bindet und die anderen Härtebildner somit gegen Magnesium austauscht, und der während der regelmäßigen Regenerationsphasen mit konzentrierten Lösungen von Magnesiumsalzen wie beispielsweise Magnesiumchlorid beschickt und damit regeneriert wird. Die Vorrichtung kann auch so ausgeführt sein, dass zwei oder mehr Kationentauschermodule mit parallelen oder gegeneinander versetzten Betriebs- und Regenerationsphasen zum Einsatz kommen, so dass im Hinterlauf des Gesamtsystems die kontinuierliche Versorgung mit behandeltem Wasser gewährleistet wird. Die Vorrichtung muss mit einer Steuereinheit 17 ausgestattet sein, die entweder zeit- oder durchflussabhängig Regenerationsvorgänge auslöst. Zur durchflußabhängigen Auslösung ist ein Durchflußmesser 13 vorgesehen. Zur Bereithaltung der Magnesiumchloridsole ist die Vorrichtung mit einem Magnesiumchlorid-Lösebehälter 19 sowie einem Vorratsbehälter 23 zur Vorhaltung von weiterem Magnesiumchlorid ausgestattet, um eine weitgehend unbeaufsichtigte Betriebsweise zu ermöglichen. Die Vorrichtung verfügt auch über eine Spüleinrichtung zur Ausspülung etwaiger Reste von Magnesiumchloridsole nach Beendigung der Regeneration. Die Vorrichtung ist optional mit einer elektrolytischen Desinfektionseinheit 24 zur Produktion desinfizierenden Chlors oder Hypochlorits aus der Magnesiumchloridsole während der Regeneration ausgestattet. Die Vorrichtung ist auch mit einem Verschneideventil ausgestattet, so dass der Magnesiumanteil in der behandelten Flüssigkeit eingestellt werden kann, um gegebenenfalls vorhandene Magnesiumrichtwerte oder Grenzwerte, beispielsweise für Trinkwasser, einhalten zu können, wo diese regional gefordert werden. Die derzeit gültige deutsche Trinkwasserverordnung sieht beispielsweise einen Richtwert für Magnesium von 50 mg/l vor bzw. 120 mg/l, wenn der Magnesiumgehalt geogen bedingt ist. Abhängig von dem Magnesiumgehalt auf der Eingangsseite können somit bis zu 2,08 mmol/l anderer Härtebildner entfernt und durch Magnesium ersetzt werden. Bei Zugrundelegung des höheren Richtwertes kann die Entfernung sogar bis 5 mmol/l oder 28 °dH erhöht werden. Es ist anzumerken, dass beide Richtwerte weder toxikologisch noch technisch bedingt sind, sondern vorrangig als Prozesskontrollparameter für die Wasserversorgungsunternehmen Verwendung finden. Eine Überschreitung beider Richtwerte durch die Vorrichtung hätte damit keinerlei negative Auswirkungen auf die Gesundheit oder die Haustechnik, sollte aber dennoch unterbunden werden, um die gesetzlichen Vorgaben einzuhalten. Magnesiumchlorid ist durch die deutsche Trinkwasserverordnung als Zusatzstoff zur Trinkwasseraufbereitung zugelassen.

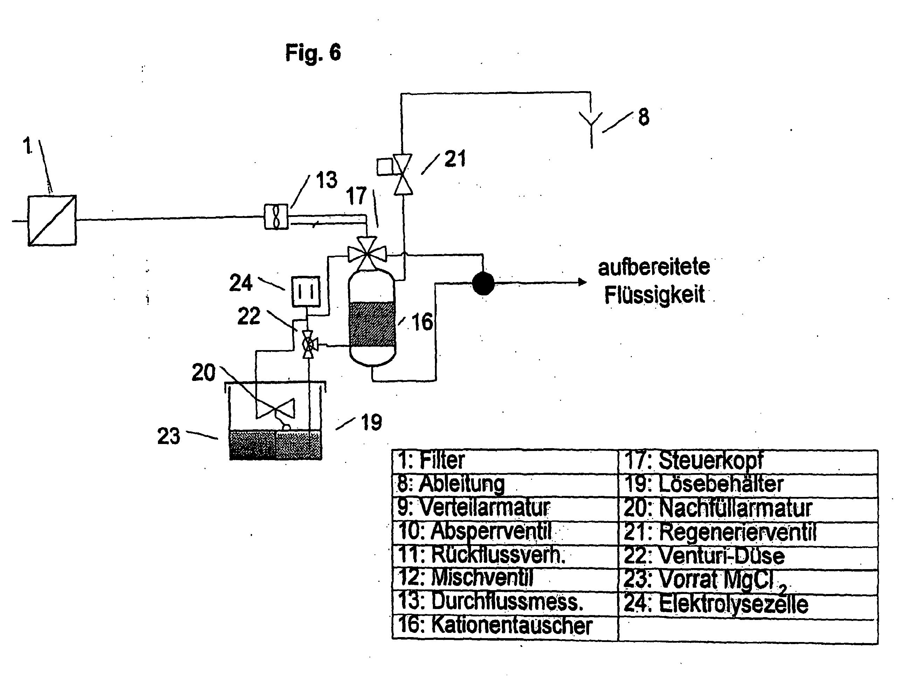

Abweichend zu der Vorrichtung in Fig. 5 kann wie in Fig. 6 gezeigt statt eines stark sauren auch ein schwach saurer Kationenaustauscher 16 verwendet werden, in beiden Fällen auch ohne dass eine Begrenzung auf die Behandlung eines Teilstroms konstruktiv vorgenommen werden muss. Eine technische Begrenzung des Austauschs auf das Äquivalent der Carbonathärte wie bei mit Natriumchlorid regenerierten schwach sauren Austauschern tritt hier nicht ein, da die Gesamthärte in der Flüssigkeit durch die Vorrichtung unverändert gelassen wird. Die übrigen Bestandteile der Vorrichtung sind außer dem Kationentauscher wie in Fig. 5.

Vorrichtungen nach Fig. 5 und Fig. 6 können verglichen mit bekannten, mit Natriumchlorid oder Säure regenerierten Kationentauschern bei ansonsten gleichen Durchflussleistungen deutlich günstiger regeneriert werden. Hauptgrund dafür ist, dass sich aufgrund der weitaus ähnlicheren Selektivitäten zwischen Magnesium und den übrigen Härtebildnern verglichen mit den weitaus größeren Selektivitätsunterschieden zwischen einwertigen Ionen und den zweiwertigen Erdalkalien eine deutlich abgeflachte Durchbruchskurve ergibt. Damit kann der Verlust an Regeneriermittel, der bei einwertigen Regeneriermitteln durch den Zwang zur Erzeugung deutlich größerer Konzentrationsunterschiede bedingt ist, deutlich begrenzt werden. Die Vorrichtung wird damit im Bezug auf die Effektivität der eingesetzten Regeneriermittel ganz erheblich günstiger, was letztlich bis zu einer weitgehenden Annäherung an stöchiometrische Salzverbrauchswerte führen kann. Um diesen Vorteil auszunutzen, sind in Fig. 5 und 6 jeweils Mischventile 22 vorgesehen, mit denen die Magnesiumchloridsole zur Regeneration deutlich mit der Flüssigkeit verdünnt werden kann. Da hier tatsächlich nur vergleichsweise geringe Konzentrationen benötigt werden, und die Löslichkeit von Magnesiumchlorid in der Sole gegenüber Natriumchlorid deutlich erhöht ist, kann das Mischventil auch als statische Venturi-Düse ausgebildet sein, die ein festes Mischungsverhältnis mit einem deutlichen überwiegenden Volumenstrom der druckbeaufschlagten Flüssigkeitsseite gegenüber dem Volumenstrom der angesaugten Sole aufweist und keinen weiteren Regelbedarf erfordert. Zur Regeneration wirkt das Steuerventil 17 mit dem Mischventil 22 zusammen. Soll nämlich der Kationentauscher 16 regeneriert werden, so wird der Teilstrom nicht von oben nach unten durch den Kationentauscher 16 geführt, sondern in einen ersten Schritt am Mischventil 22 mit einem Losebehälter 19 entnommener Lose vermischt und in einen zweiten Schritt von unten nach oben - also im Gegenstrom - durch den Kationentauscher 16 geführt und letztendlich der Ableitung 8 zugeführt. Nach erfolgter Regeneration wird am Steuerventil wieder umgeschaltet.

Die deutlich abgeflachte Durchbruchskurve führt dazu, dass auch während des Regelbetriebes stets Anteile an anderen Härtebildnern in der Flüssigkeit verbleiben und der Durchbruch der anderen Härtebildner sehr langsam und kontinuierlich erfolgt. Aufgrund des naturnahen Wirkprinzips der Erhöhung des Magnesiumgehaltes ist jedoch die Behandlung noch so lange erfolgreich, bis der Durchbruch sich der völligen Erschöpfung der Austauschkapazität annähert. Dies ermöglicht verlängerte Standzeiten, bzw. verglichen mit der molaren Austauschkapazität eines mit Natriumchlorid oder Säure regenerierten Kationentauschers ein größeres Volumen behandelter Flüssigkeit, bis die nächste Regeneration erfolgen muss. Dies ist insbesondere für die Behandlung von Flüssigkeiten außer Trinkwasser nutzbar. Speziell für die Behandlung von Trinkwasser sollte aus Gründen der hygienischen Eigensicherheit der Vorrichtung spätestens alle 4 Tage eine Regeneration unabhängig vom tatsächlich erfolgten Durchfluss durchzuführen sein.

Für Vorrichtungen nach den Figuren 5 oder 6 können grundsätzlich auch bestehende, bereits installierte Kationentauscher für das erfindungsgemäße Verfahren umgewidmet werden. Hierfür müssen die Systeme so umgerüstet werden, dass damit eine effektive, wirtschaftliche und hinsichtlich der Umweltauswirkungen optimierte Betriebsweise sichergestellt ist. Diese Umrüstung kann bauseitig durchgeführt werden durch Austausch des eingefüllten Austauscherharzes gegen ein Harz mit günstigeren Eigenschaften (Selektivitäten) für den Betrieb und die Regeneration mit Magnesiumsalzen. Eine weitere Möglichkeit besteht im Austausch des bestehenden Steuerventilsatzes mit den dazugehörigen Blenden und Drosseln durch Ventilsätze mit dazugehörigen Blenden und Drosseln, welche zu wirtschaftlichen Betriebs- und Regenerationsbedingungen führen. Dies wird insbesondere erreicht durch Nachrüstung von Blenden oder Drosseln, welche den Volumenstrom der Sole während des Regenerationsmodus drosseln und/oder durch Maßnahmen (z.B. Venturidüse), welche den Verbrauch an Sole während der Regeneration durch Verschneidung oder verstärkte Verschneidung mit Flüssigkeit (z.B. Wasser) begrenzen.

Eine Umwidmung bestehender Geräte auf das erfindungsgemäße Verfahren kann alternativ oder zusätzlich auch durch Veränderungen an der Regelungstechnik (z.B. Software) vorgenommen werden. Hierzu müssen Änderungen am Steuertakt oder der Abfolge der einzelnen Durchströmungsphasen während der Regeneration oder der jeweiligen Dauer derselben durchgeführt werden. Die Veränderungen können auch an den voreingestellten Betriebsparametern (Überwachungsfunktion zur Auslösung der Regeneration) so vorgenommen werden, dass dadurch Betriebs- und Regenerationsbedingungen erreicht werden, die für den Einsatz von Magnesiumsalzen als Regeneriennittel optimiert sind.

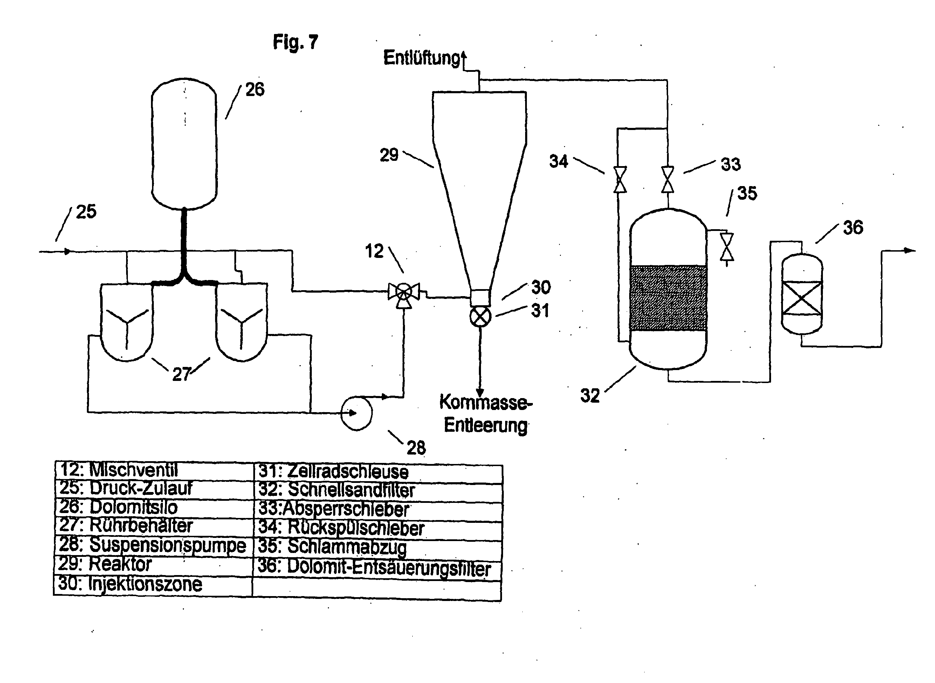

Nach Fig. 7 ist es insbesondere für großtechnische Anwendungen auch möglich, das Verfahren in Schnell- oder Langsamentcarbonierungsanlagen zu implementieren. Figur 7 zeigt, wie die Flüssigkeit in einem Mischventil 12 mit einer Suspension aus aufgeschlämmtem, gebrannten Dolomit (MgO/CaO) oder einer Suspension aus einer aufgeschlämmten Mischung aus gebranntem Dolomit und gebranntem Kalk versetzt wird. Durch Verwendung von magnesiumhaltigem gebranntem Dolomit, und insbesondere durch die basische Reaktion der Magnesiumoxide, ist es möglich, die Flüssigkeit in der Schnellentcarbonisierung bis über das Gleichgewicht hinaus zu entcarbonisieren und damit auch zu enthärten. Zur Herstellung der Suspension ist ein Dolomitsilo 26 vorgesehen, welches einen oder mehrere Rührbehälter 27 mit dem gebrannten Dolomit oder einer Mischung von gebranntem Dolomit und gebranntem Kalk beschickt; aus den Rührbehältern erfolgt die Beimischung der Suspension zum Hauptstrom über eine Dosierpumpe 28. Nach erfolgter Vermischung wird der suspensionsbeladene Hauptstrom über eine Injektionszone 30 in einen Reaktor 29 eingespeist und verbleibt dort während einer Reaktionszeit von 10 bis 20 Minuten, während der die Ausfällung der Härtebildner erfolgt. Der Reaktor ist zum Abzug der ausgefallenen Härtebildner-Kornmasse mit einer kontinuierlichen Entleerungsvorrichtung 31 versehen, wofür beispielsweise eine Zellradschleuse verwendet wird. Nach Verlassen des Reaktors wird die entlüftete Flüssigkeit zur weiteren Abtrennung nicht sedimentierter Partikel einem Schnellsandfilter 32 aufgegeben. Der Schnellsandfilter ist zur regelmäßigen Ausspülung abgetrennter Partikel mit einer Rückspülvorrichtung 33, 34 und 35 ausgestattet. Abschließend wird die Flüssigkeit einem Entsäuerungsfilter 36 mit einer ungebrannten Dolomitfüllung aufgegeben, in dem durch Lösung des Dolomits eine finale Erhöhung des Magnesiumgehalts sowie die Einstellung der Flüssigkeit auf das Kalk-Kohlensäure-Gleichgewicht erfolgt. Der Entsäuerungsfilter kann auch in den Schnellsandfilter integriert werden, wenn dieser mit einer entsäuernden Dolomit-Schicht unterhalb der Sandschicht gefüllt ist und somit als Mehrschichtfilter betrieben wird.

## Patentansprüche

1. Verfahren zur Verminderung der Steinbildung und Korrosion in Systemen, die Flüssigkeit führen oder mit Flüssigkeiten in Kontakt stehen, wobei die Flüssigkeit derart behandelt wird, dass die molare Verteilung der Härtebildner in der zu behandelnden Flüssigkeit so beeinflusst wird, dass der Anteil an Magnesium und/oder Magnesiumverbindungen zu Lasten des Anteils der anderen Härtebildner vergrößert wird,
**dadurch gekennzeichnet, dass**
lediglich ein Teilstrom der Flüssigkeit behandelt wird und anschließend der behandelte Teilstrom mit einem unbehandelten Hauptstrom vermischt wird,
wobei der Teilstrom mindestens 50 % der zu behandelnden Flüssigkeit beträgt durch ein Verschneideventil eingestellt wird, um den Magnesiumanteil in der behandelten Flüssigkeit einzustellen, und
die molare Verteilung des Teilstroms derart beeinflusst wird, dass der Anteil an Magnesium und/oder Magnesiumverbindungen zwischen 20 % und 100 % des Gesamtgehalts der Härtebildner beträgt.

2. Verfahren nach Anspruch 1,
**dadurch gekennzeichnet, dass**
der Teilstrom 70 % der zu behandelnden Flüssigkeit beträgt.

3. Verfahren nach Anspruch 1,
**dadurch gekennzeichnet, dass**
hierzu der zu behandelnde Teilstrom mit einem magnesiumhaltigen Gestein oder Mineral, z.B. mit Dolomit, in Kontakt gebracht wird.

4. Verfahren nach Anspruch 1,
**dadurch gekennzeichnet, dass**
hierzu dem zu behandelnden Teilstrom eine Lösung eines Magnesiumsalzes mengenproportional zudosiert wird.

5. Verfahren nach Anspruch 1,
**dadurch gekennzeichnet, dass**
hierzu dem zu behandelnden Teilstrom Magnesiumionen im direkten und äquivalenten Austausch gegen andere Ionen zugegeben werden.

## Claims

1. Method for reducing scale formation and corrosion in systems conveying or in contact with liquids, whereby the liquid is treated such that the molar distribution of the hardening constituents in the liquid to be treated is influenced such that the proportion of magnesium and/or magnesium compounds is increased at the expense of the proportion of the other hardening constituents, **characterised in that** only a partial flow of the liquid is treated and then the treated partial flow is mixed with an untreated main flow, whereby the partial flow is at least 50% of the liquid to be treated set by means of a dilution valve in order to maintain the magnesium proportion in the treated liquid and the molar distribution of the partial flow is influenced such that the proportion of magnesium and/or magnesium compounds is between 20% and 100% of the overall content of the hardening constituents.

2. Method according to Claim 1, **characterised in that** the partial flow is 70% of the liquid to be treated.

3. Method according to Claim 1, **characterised in that** to this end the partial flow to be treated is brought into contact with a magnesium-containing rock or mineral, e.g. dolomite.

4. Method according to Claim 1, **characterised in that** to this end a solution of a magnesium salt is added in proportional quantity to the partial flow to be treated.

5. Method according to Claim 1, **characterised in that** to this end magnesium ions are added to the partial flow to be treated in direct and equivalent exchange for other ions.

## Revendications

1. Procédé de diminution de la formation de tartre et de la corrosion dans des systèmes qui conduisent des liquides ou qui sont en contact avec des liquides, le liquide étant traité de telle sorte que la répartition molaire des agents de formation d'incrustations dans le liquide à traiter soit influencée de telle sorte que la teneur en magnésium et/ou en composés du magnésium soit augmentée au détriment de la teneur en autres agents de formation d'incrustations, **caractérisé en ce que** l'on ne traite qu'une partie de l'écoulement du liquide et qu'ensuite l'écoulement partiel traité est mélangé avec un écoulement principal non traité, l'écoulement partiel représentant au moins 50% du liquide à traiter l'écoulement partiel étant ajusté au moyen d'une soupape de coupure pour ajuster la teneur en magnésium dans le liquide traité, et la répartition molaire de l'écoulement partiel étant influencée de telle sorte que la teneur en magnésium et/ou en composés du magnésium soit comprise entre 20% et 100% de la teneur totale en agents de formation d'incrustations.

2. Procédé selon la revendication 1, **caractérisé en ce que** l'écoulement partiel représente 70% du liquide à traiter.

3. Procédé selon la revendication 1, **caractérisé en ce que** l'écoulement partiel à traiter est mis dans ce but en contact avec une pierre ou un minéral contenant du magnésium, par exemple de la dolomite.

4. Procédé selon la revendication 1, **caractérisé en ce qu'**une solution d'un sel de magnésium est ajoutée dans ce but en quantité proportionnelle à l'écoulement partiel à traiter.

5. Procédé selon la revendication 1, **caractérisé en ce que** des ions magnésium sont ajoutés dans ce but par échange direct et équivalent d'autres ions à l'écoulement partiel à traiter.
